# EUROPÄISCHE PATENTSCHRIFT

(11) **EP 4 481 360 B1**
(45) Veröffentlichungstag und Bekanntmachung des Hinweises auf die Patenterteilung: **23.07.2025**
(21) Anmeldenummer: 23180727.2
(22) Anmeldetag: 21.06.2023
(51) Int. Cl.: G01M 17/007

(54) **REGENSIMULATIONSANLAGE UND VERFAHREN ZUM TESTEN VON WITTERUNGSEINFLÜSSEN AUF DIE OBJEKTERKENNUNG DURCH SENSOREN**
RAIN SIMULATION SYSTEM AND METHOD FOR TESTING WEATHER INFLUENCES ON THE OBJECT RECOGNITION BY SENSORS
INSTALLATION DE SIMULATION DE PLUIE ET PROCÉDÉ DE TEST D'INFLUENCES MÉTÉOROLOGIQUES SUR LA RECONNAISSANCE D'OBJET AU MOYEN DE CAPTEURS

(43) Veröffentlichungstag der Anmeldung: 25.12.2024
(73) Patentinhaber: CARISSMA Institute of Safety in Future Mobility (C-ISAFE) der Technischen Hochschule Ingolstadt, 85049 Ingolstadt (DE)
(72) Erfinder: Brandmeier, Thomas, 93077 Bad-Abbach (DE); Steinhauser, Dagmar, 85051 Ingolstadt (DE); Lugner, Robert, 85055 Ingolstadt (DE); Graf, Michael, 85057 Ingolstadt (DE); Ruzok, Christopher, 85057 Ingolstadt (DE)
(74) Vertreter: Canzler & Bergmeier Patentanwälte Partnerschaft mbB

(56) Entgegenhaltungen:
- WO-A1-2024/103095
- AT-A1- 512 490
- CN-A- 109 444 997
- DE-A1- 102021 004 659
- DE-B4- 102019 131 642
- KR-B1- 101 656 769

## Beschreibung

Die vorliegende Erfindung betrifft eine Regensimulationsanlage zum Testen von Witterungseinflüssen auf die Objekterkennung durch Sensoren. Die Regensimulationsanlage weist eine Einrichtung zur Wasserzufuhr, insbesondere einen Wassertank, eine mit der Einrichtung zur Wasserzufuhr hydraulisch verbundene Pumpe zur Erzeugung eines Zuführdruckes, wenigstens eine erste Düsenanordnung, welche mittels wenigstens eines ersten Rohrleitungssystems mit der Pumpe hydraulisch verbunden ist, wenigstens eine zweite Düsenanordnung, welche mittels wenigstens eines zweiten Rohrleitungssystems mit der Pumpe hydraulisch verbunden ist, sowie eine Steuereinheit zum Ansteuern der Düsenanordnungen auf. Weiterhin betrifft die Erfindung ein Verfahren zum Testen von Witterungseinflüssen auf die Objekterkennung von Sensoren, insbesondere von Umfeldsensoren von Kraftfahrzeugen, mit einer derartigen Regensimulationsanlage.

Moderne Fahrzeuge verfügen heute über zahlreiche Sensoren, die den Fahrer beispielsweise beim Einparken unterstützen, die helfen, den Abstand zum vorausfahrenden Fahrzeug zu halten, die Geschwindigkeit messen oder Hindernisse erkennen. Diese sogenannten Umfeldsensoren sind auch wesentlich für das automatisierte Fahren, da sie die Umgebung des Fahrzeugs vollständig und zuverlässig erfassen müssen. Als Umfeldsensoren kommen beispielsweise Ultraschallsensoren, Kameras, Radar- und Lidar-Technologien in Frage, die das Umfeld detektieren und unfallvermeidende und unfallfolgenvermindernde Maßnahmen veranlassen. Allerdings sind Störeinflüsse durch verschiedene Witterungsbedingungen (Regen, Schnee oder Nebel) ein großes Problem, da sie die zuverlässige Objekterkennung beeinträchtigen. Andere Fahrzeuge oder Personen können somit von den Systemen zu spät oder gar nicht erkannt werden. Es ist deshalb erforderlich, den zuverlässigen und kritischen Funktionsbereich solcher Sensoren zu bestimmen, um die Sensoren zielgerichtet einsetzen und verbessern zu können. Bei solchen Tests ist es wesentlich, die Testbedingungen möglichst realitätsnah auszugestalten und verfälschende Einflussfaktoren auf die Tests zu vermeiden. Dabei sollten möglichst auch verschiedene Witterungsszenarien nachgebildet werden können.

In der CN 109 444 997 A wird eine Regensimulationsvorrichtung zum Einsatz bei Forschungen zur Bodenerosion durch Regen beschrieben. Dabei kann die Durchflussmenge der einzelnen Düsen durch eine vorgelagerte Scheibe mit verschieden großen Öffnungen verändert werden kann.

Die DE 10 2019 131 642 B4 beschreibt eine Regensimulationsvorrichtung für die Erprobung von Fahrerassistenzsystemen bzw. entsprechender Sensoren, die an einem Testfahrzeug angebracht werden kann. Hierzu sind an einem Gurt, der um das Heck des Fahrzeugs spannbar ist, ein oder mehrere Düsenmodule angebracht. Jedes Düsenmodul verfügt über wenigstens eine Düse. Der Öffnungsgrad, der Sprühkegelwinkel sowie die Absprührichtung der Düsen kann dabei eingestellt werden.

Aus der DE 10 2021 004 659 A1 ist eine Regensimulationsvorrichtung bekannt, die mobil ausgebildet ist und eine ortsunabhängige Simulation verschiedener Regenarten ermöglicht. Neben dynamischen Fahrzeugtests können mit dieser Anlage auch Sensorsysteme unter verschiedenen Umweltbedingungen validiert und verifiziert werden. Die Regensimulationsvorrichtung umfasst in an sich bekannter Weise einen Flüssigkeitstank, eine Pumpe, einen Verteiler und mehrere mit dem Verteiler gekoppelte Rohrverzweigungen. An jeder dieser Rohrverzweigungen sind jeweils mehrere Düsen angeordnet. Bei dieser Regensimulationsvorrichtung ist es möglich, einen Einstellwinkel der Düsen, einen Winkel des die Düsenanordnung tragenden Gestells sowie den Flüssigkeitsdruck zu verändern, um verschiedene Regenarten zu simulieren. Mit dieser Regensimulationsvorrichtung können zwar verschiedene Regenarten simuliert werden, dennoch kann damit nur ein Teil der realen Regencharakteristiken nachgebildet werden.

Aus der nachveröffentlichten Schrift WO 2024/103095 A1 weiterhin eine Vorrichtung zur Nachbildung von Regen für eine Kraftfahrzeugteststrecke bekannt, welche eine erste Gruppe von Düsen eines ersten Auslegungstyps und eine zweite Gruppe von Düsen eines zweiten Auslegungstyps beinhaltet.

Aufgabe der vorliegenden Erfindung ist es daher, eine Regensimulationsanlage sowie ein Verfahren zum Testen von Witterungseinflüssen auf die Objekterkennung von Sensoren vorzuschlagen, mit deren Hilfe mehrere unterschiedliche Regencharakteristiken möglichst realitätsnah nachgebildet werden können.

Die Aufgabe wird gelöst mit den Merkmalen der unabhängigen Ansprüche.

Eine Regensimulationsanlage zum Testen von Witterungseinflüssen auf die Objekterkennung durch Sensoren weist eine Einrichtung zur Wasserzufuhr, insbesondere einen Wassertank, eine mit der Einrichtung zur Wasserzufuhr hydraulisch verbundene Pumpe zur Erzeugung eines Zuführdruckes, wenigstens eine erste Düsenanordnung, welche mittels wenigstens eines ersten Rohrleitungssystems mit der Pumpe hydraulisch verbunden ist, wenigstens eine zweite Düsenanordnung, welche mittels wenigstens eines zweiten Rohrleitungssystems mit der Pumpe hydraulisch verbunden ist, sowie eine Steuereinheit zum Ansteuern der Düsenanordnungen auf.

Es wird vorgeschlagen, dass die erste Düsenanordnung eine erste Anzahl von Düsen einer ersten Bauart umfasst und die zweite Düsenanordnung eine zweite Anzahl von Düsen einer zweiten Bauart, wobei die Düsen der ersten Bauart und die Düsen der zweiten Bauart bei gleichem Zuführdruck jeweils einen unterschiedlichen Volumenstrom aufweisen. Das erste Rohrleitungssystem beinhaltet wenigstens ein Absperrventil und das zweite Rohrleitungssystem beinhaltet ebenfalls wenigstens ein Absperrventil und die wenigstens eine erste Düsenanordnung und die wenigstens eine zweite Düsenanordnung sind durch Ansteuerung der Absperrventile unabhängig voneinander ansteuerbar und/oder mit Wasser beschickbar.

Die Vorteile der Regensimulationsanlage werden auch mit einem Verfahren zum Testen von Witterungseinflüssen auf die Objekterkennung von Sensoren, insbesondere von Umfeldsensoren in Kraftfahrzeugen, mit einer derartigen Regensimulationsanlage erzielt, welches somit ebenfalls beansprucht wird.

Weiterhin wird die Verwendung einer solchen Regensimulationsanlage zum Testen von Witterungseinflüssen auf die Objekterkennung von Umfeldsensoren in Kraftfahrzeugen beansprucht.

Durch die Verwendung zweier verschiedener Düsenbauarten ist es möglich, ein sehr großes Spektrum hinsichtlich der Regenintensität abzubilden, das sowohl sehr niedrige Regenintensitäten von beispielsweise 15 mm/h als auch sehr hohe Regenintensitäten von beispielsweise 200 mm/h umfassen kann. Insbesondere ist es jedoch durch die Kombination zweier verschiedener Düsenbauarten möglich, auch eine realitätsnahe und konstante Tropfengrößenverteilung abzubilden. Anders ausgedrückt können hierdurch Regenereignisse erzeugt werden, bei denen die Tropfen, die die Sensorsignale stören, stets in der richtigen Anzahl und Größe vorhanden sind. Die Tropfendurchmesser können hierdurch spezifisch auf den Einsatz bei bestimmten Fahrzeugsensoren angepasst werden. Dies ist wesentlich, da die aufgeführten Umfeldsensoren das Sensorsignal jeweils bei unterschiedlichen Wellenlängen emittieren. Das Sensorsignal wird daher, in Abhängigkeit der Wellenlänge, von der Anzahl und der Größe der Tropfen, also der Tropfengrößenverteilung, unterschiedlich stark gestört.

Vorteilhaft ist es zudem, dass mit der Regensimulationsanlage auch stehender Nebel erzeugbar ist.

Von Vorteil ist es, wenn die Regensimulationsanlage eine Druckregeleinheit zur Regelung des Zuführdruckes umfasst. Hierdurch ist es, im Gegensatz zu einer einfachen Einstellung des Zuführdruckes, möglich, Regenereignisse verschiedenster Intensität mit einer sehr hohen zeitlichen und, bei entsprechender Anordnung der Düsenanordnungen, auch örtlichen Homogenität zu erzeugen.

Zur Druckregelung umfasst die Druckregeleinheit vorzugsweise wenigstens einen Drucksensor zur Messung eines an der ersten und/oder an der zweiten Düsenanordnung anliegenden Drucks. Insbesondere mit einem als Drucktransmitter ausgebildeten Drucksensor ist es möglich, den an den Düsen anliegenden Druck echtzeitfähig zu erfassen und direkt in die Regeleinheit einzusteuern. Verzögerungen können hierdurch vermieden werden und die zeitliche Homogenität sowohl der Regenintensität als auch der Tropfenverteilung kann sichergestellt werden. Vorzugsweise ist der wenigstens eine Drucksensor nahe den Düsenanordnungen angeordnet. Druckverluste, welche in langen Zuleitungen entstehen, können hierdurch herausgefiltert werden. Beispielsweise kann ein Drucksensor in einer gemeinsamen Zuleitung für die beiden Düsenanordnungen unmittelbar vor der Verzweigung in die beiden Düsenanordnungen angeordnet werden.

Da bei der Regensimulationsanlage die wenigstens eine erste Düsenanordnung und die wenigstens eine zweite Düsenanordnung unabhängig voneinander ansteuerbar und/oder mit Wasser beschickbar sind, kann wahlweise nur die erste Düsenanordnung, nur die zweite Düsenanordnung oder beide Düsenanordnungen kombiniert angesteuert bzw. mit Wasser beschickt werden, wodurch die Vielfalt der nachbildbaren Regencharakteristiken erhöht wird.

Ebenso bringt es Vorteile mit sich, wenn eine Regenintensität der Regensimulationsanlage einstellbar ist, insbesondere zwischen einer Intensität von 15 mm/h bis 120 mm/h, und vorzugsweise stufenlos einstellbar ist. Hierdurch können sämtliche Intensitäten natürlich vorkommenden Regens abgebildet werden. Es können somit beliebige, vom Nutzer gewünschte Intensitäten des Regens erzeugt werden.

Nach einer ersten Ausführung ist es vorteilhaft, wenn die Regenintensität durch Veränderung des Zuführdruckes veränderbar ist. Hierzu kann beispielsweise in einer Steuereinheit hinterlegt sein, welche vom Nutzer gewünschte Regenintensität welchen Zuführdruck benötigt. Umfasst die Steuereinheit eine Druckregeleinheit, kann zudem, wie bereits beschrieben, das Regenereignis mit einer hohen zeitlichen Konstanz erzeugt werden.

Bei dem Verfahren ist es entsprechend vorteilhaft, wenn zur stufenlosen Einstellung der Regenintensität der Zuführdruck des zugeführten Wassers verändert wird.

Vorteile bringt es zudem mit sich, wenn der Zuführdruck in einem Bereich von 0,2 bar - 5 bar, vorzugsweise 0,2 bar - 3 bar veränderbar ist. Durch die Vorgabe eines Mindestdruckes können die Düsen ein stabiles Sprühbild mit einem konstanten und großen Spielwinkel aufbauen, was weiterhin zur zeitlichen wie auch örtlichen Homogenität des Regens beiträgt. Andererseits kann durch die Vorgabe eines Maximaldruckes die gewünschte Tropfengrößenverteilung sichergestellt werden. Beispielsweise neigen einige Düsen dazu, bei hohem Druck zu viele kleinere Tröpfchen zu erzeugen, wodurch die gewünschte Tropfengrößenverteilung nicht mehr eingehalten werden kann.

Nach einer anderen Ausführung der Regensimulationsvorrichtung, die zusätzlich oder alternativ zur Veränderung des Zuführdruckes eingesetzt werden kann, ist es von Vorteil, wenn die Regenintensität durch wahlweises Ansteuern nur der ersten Düsenanordnung oder nur der zweiten Düsenanordnung oder gleichzeitig beider Düsenanordnungen veränderbar ist. Aufgrund der zwei verschiedenen Düsenbauarten ist es somit möglich, ein besonders großes Spektrum an Regenintensitäten mit einer großen Homogenität abzubilden.

Bei dem Verfahren bringt es entsprechend Vorteile mit sich, wenn zur Erzeugung von Regen mit einer niedrigen Intensität nur die Düsen der ersten Düsenanordnung angesteuert werden. Vorzugsweise wird mit diesen Düsen ein Regen mit einer Intensität von 15 mm/h - 40 mm/h, vorzugsweise von 20 mm/h - 40 mm/h erzeugt. Für die Düsen der ersten Düsenanordnung wird dabei eine Düsenbauart ausgewählt, welche bereits bei niedrigen Volumenströmen ein homogenes Sprühbild aufweist.

Ebenso ist es bei dem Verfahren vorteilhaft, wenn zur Erzeugung von Regen mit einer höheren Intensität nur die Düsen der zweiten Düsenanordnung angesteuert werden, oder wenn zur Erzeugung von Regen mit einer höheren Intensität die Düsen der ersten und der zweiten Düsenanordnung gemeinsam angesteuert werden. Vorzugsweise wird unter einem Regen mit einer höheren Intensität eine Intensität von etwa 30 mm/h -120 mm/h, vorzugsweise etwa 35 mm/h - 120 mm/h, verstanden. Für die Düsen der zweiten Düsenanordnung wird dabei eine Bauart ausgewählt, welche bei höheren Volumenströmen ein homogenes Sprühbild aufbauen kann.

Nach einer alternativen Ausführung des Verfahrens ist es vorteilhaft, wenn zur Erzeugung von Regen mit einer mittleren Intensität nur die Düsen der zweiten Düsenanordnung angesteuert werden, oder wenn zur Erzeugung von Regen mit einer hohen Intensität die Düsen der ersten und der zweiten Düsenanordnung gemeinsam angesteuert werden. Vorzugsweise wird unter einem Regen mit einer mittleren Intensität eine Intensität von etwa 30 mm/h - 70 mm/h, vorzugsweise etwa 35 mm/h - 60 mm/h, verstanden. Unter einem Regen mit einer hohen Intensität wird vorzugsweise eine Intensität von 50 mm/h - 120 mm/h verstanden.

Vorteilhaft ist es zudem, wenn die erste Düsenanordnung axial angeströmte Düsen umfasst und die zweite Düsenanordnung tangential angeströmte Düsen umfasst. Es wurde herausgefunden, dass tangential angeströmte Düsen oftmals einen größeren Volumenstrom benötigen, um ein homogen verteiltes Sprühbild zu erzeugen, so dass diese für die Erzeugung von Regen mit einer höheren Intensität geeignet sind. Demgegenüber liefern axial angeströmte Düsen auch und insbesondere bei kleineren Volumenströmen ein gutes Sprühbild.

Nach einer alternativen Ausführung ist es jedoch auch vorteilhaft, wenn die erste Düsenanordnung Düsen mit einem ersten Düsendurchmesser umfasst und die zweite Düsenanordnung Düsen mit einem zweiten Düsendurchmesser umfasst. Unter Düsendurchmesser ist dabei der Bohrungsdurchmesser der Düse zu verstehen. Auch hierdurch ist es möglich, ein großes Spektrum verschiedener Regenintensitäten mit einer großen Homogenität zu erzeugen.

Ebenso bringt es Vorteile mit sich, wenn die Düsen der ersten Düsenanordnung und/oder die Düsen der zweiten Düsenanordnung als Vollkegeldüsen ausgebildet sind. Diese haben sich als besonders vorteilhaft für ein homogenes Sprühbild erwiesen. Dabei wird vorzugsweise ein möglichst großer Sprühwinkel von 120° eingestellt.

Auch ist es vorteilhaft, wenn zumindest die Düsen jeweils einer Düsenanordnung, vorzugsweise die Düsen sämtlicher Düsenanordnungen, in einer gemeinsamen, insbesondere horizontalen, Ebene angeordnet sind. Hierdurch weisen die erzeugten Regentropfen dieselbe Fallhöhe auf und erreichen dieselbe Endgeschwindigkeit, sodass der Regen unter reproduzierbaren Bedingungen erzeugt wird. Es ist jedoch auch möglich, die Düsen der ersten Anordnung beispielsweise auf einer anderen horizontalen Ebene anzuordnen als die Düsen der zweiten Anordnung. Insbesondere wenn die verschiedenen Düsenbauarten einen unterschiedlichen Sprühwinkel aufweisen, kann durch eine solche Anordnung ebenfalls ein homogener Regen erzeugt werden.

Vorteilhaft ist es zudem, wenn die Düsen der ersten Düsenanordnung und/oder die Düsen der zweiten Düsenanordnung in mehreren Reihen angeordnet sind, wobei die Düsen einer Reihe jeweils versetzt zu den Düsen der benachbarten Reihen angeordnet sind. Es hat sich gezeigt, dass durch diese versetzte Anordnung auch eine besonders hohe örtliche Homogenität des Regens sowohl bezüglich der Intensität als auch bezüglich der Tröpfchengrößenverteilung erzielt werden kann.

Vorteile bringt es zudem mit sich, wenn jede Düse innerhalb einer Düsenanordnung einen individuellen Abstand zu benachbarten Düsen derselben Düsenanordnung aufweist, wobei der individuelle Abstand jeder Düse in Abhängigkeit von einer individuellen Größe eines Sprühkegels der Düse festgelegt ist. Die vorliegende Erfindung hat herausgefunden, dass auch baugleiche Düsen z.B. aufgrund nur minimal unterschiedlicher Bohrungsdurchmesser stets leicht unterschiedliche Sprühkegel aufweisen. Die Größe des Sprühkegels kann durch Tests vor der Montage der Düse innerhalb der Düsenanordnung ermittelt werden und daraus kann wiederum der individuelle Abstand der jeweiligen Düsen ermittelt werden. Schwankungen der Sprühkegel der einzelnen Düsen wirken sich somit nicht auf die örtliche Homogenität des erzeugten Regens aus.

Ebenfalls vorteilhaft für ein homogenes Sprühbild der Düsen ist es, wenn eine Rohrlänge zwischen einer Abzweigung von einer zuführenden Wasserleitung und der Düse mindestens 20 cm beträgt. Hierdurch kann erreicht werden, dass eine laminare Anströmung der Düsen vorliegt, wodurch eine homogene Intensitätsverteilung der beregneten Fläche unterstützt wird.

Besonders vorteilhaft ist es zudem, wenn zur Einstellung einer gewünschten Tropfengrößenverteilung unterhalb der Düsenanordnungen wenigstens ein Netz angeordnet ist. Die Erfindung hat herausgefunden, dass mittels eines solchen Netzes sehr feine Tröpfchen gut herausgefiltert werden können und ebenso größere Tropfen erzeugt werden können, welche allein mit den Düsen nicht abgebildet werden können. Die Regensimulationsanlage kommt somit einer natürlichen Tropfengrößenverteilung, die auch einen realitätsnahen Anteil vergleichsweise großer Regentropfen mit einem Durchmesser von über 3 mm aufweist, noch näher.

Zur Einstellung bestimmter Tropfengrößen ist es zudem vorteilhaft, wenn das Netz austauschbar ist, wobei zur Einstellung der gewünschten Tropfengrößenverteilung verschiedene Netze mit unterschiedlichen Maschengrößen einsetzbar sind. Auch dies trägt dazu bei, eine möglichst realistische Tropfengrößenverteilung einzustellen.

Bei dem Verfahren ist es entsprechend vorteilhaft, wenn zur Einstellung einer gewünschten Tropfengrößenverteilung unterhalb der Düsenanordnungen wenigstens ein Netz mit einer der gewünschten Tropfengrößenverteilung entsprechenden Maschengröße angeordnet wird.

Ebenso bringt es Vorteile mit sich, wenn das Netz mehrlagig ausgebildet ist und/oder wenn mehrere Netze übereinander angeordnet sind. Auch durch die Anordnung mehrerer Lagen von Netzen lässt sich die Tropfengrößenverteilung gut beeinflussen.

Vorteilhaft ist es zudem, wenn die erste Düsenanordnung und/oder die zweite Düsenanordnung in einer Höhe von wenigstens 4 m, vorzugsweise in einer Höhe von wenigstens 5 m, über einem Boden der Regensimulationsanlage angeordnet sind. Es hat sich gezeigt, dass eine solche Fallhöhe das Erreichen der gewünschten bzw. erforderlichen Endgeschwindigkeit der Tropfen begünstigt.

Vorteile bringt es zudem mit sich, wenn die Regensimulationsanlage eine Entkalkungsanlage zur Entkalkung von der Regensimulationsanlage zugeführtem Wasser aufweist. Durch die Entfernung des Kalks aus dem Wasser weist das verwendete Wasser eine ähnliche Leitfähigkeit bzw. einen ähnlichen Brechungsindex wie echtes Regenwasser auf, was die Qualität der durchgeführten Tests weiter erhöht. Die Grenzen der Funktionalität der Sensoren können hierdurch besonders realitätsnah ermittelt werden.

Auch ist es vorteilhaft, wenn die Regensimulationsanlage eine Desinfektionsstation zur Entkeimung von der Regensimulationsanlage zugeführtem Wasser aufweist. Negative Beeinflussungen der Regensimulationsanlage durch Filmbildung oder Rückstände können ebenso wie gesundheitliche Beeinträchtigungen der Nutzer vermieden werden.

Auch ist es von Vorteil, wenn die Düsenanordnungen eine Fläche von wenigstens 80 m², vorzugsweise wenigstens 100 m² und besonders bevorzugt von wenigstens 150 m² überdecken. Dies erlaubt es, Messungen unter realistischen Bedingungen wie z.B. kreuzende Objekte, unter verschiedenen Winkeln und über verschiedene Entfernungen zwischen dem Sensor und dem zu erkennenden Objekt durchzuführen.

Nach einer Weiterbildung der Erfindung ist es vorteilhaft, wenn die Regensimulationsanlage weiterhin einen Lichtsimulator umfasst. Hierdurch können unterschiedliche Lichteffekte zur Simulation entgegenkommender Fahrzeuge, querender Fahrzeuge, von Fahrrädern oder von reflektierenden Objekten erzeugt werden.

Nach einer anderen Weiterbildung der Erfindung ist es vorteilhaft, wenn die Regensimulationsanlage weiterhin einen Windsimulator umfasst. Mit diesem können unterschiedliche Windgeschwindigkeiten aus unterschiedlichen Richtungen kontrolliert eingebracht werden. Die Fallrichtung der Regentropfen kann hierdurch beeinflusst und separat untersucht werden.

Weitere Vorteile der Erfindung werden anhand der nachfolgend dargestellten Ausführungsbeispiele beschrieben. Es zeigen:
- **Figur 1**: eine Regensimulationsanlage zum Testen von Witterungseinflüssen auf die Objekterkennung durch Sensoren in einer schematischen Übersichtsdarstellung,
- **Figur 2**: eine Draufsicht auf ein Segment einer Regensimulationsanlage mit zwei Düsenanordnungen,
- **Figur 3**: eine Draufsicht auf eine Regensimulationsanlage mit mehreren Segmenten,
- **Figur 4**: eine schematische Detailansicht einer Regensimulationsanlage mit einem Netz,
- **Figur 5**: eine schematische Detailansicht einer weiteren Ausführung einer Regensimulationsanlage, sowie
- **Figur 6**: eine schematische Darstellung einer Regensimulationsanlage nach einer weiteren Ausführung mit Wasseraufbereitung.

Bei der nachfolgenden Beschreibung der Ausführungsbeispiele werden identische oder in ihrer Gestaltung und/oder Wirkweise zumindest vergleichbare Merkmale mit gleichen Bezugszeichen versehen. Weiterhin werden diese lediglich bei ihrer erstmaligen Erwähnung detailliert erläutert, während bei den folgenden Ausführungsbeispielen lediglich auf die Unterschiede zu den bereits beschriebenen Ausführungsbeispielen eingegangen wird. Weiterhin sind aus Gründen der Übersichtlichkeit von mehreren identischen Bauteilen bzw. Merkmalen oftmals nur eines oder nur einige wenige beschriftet.

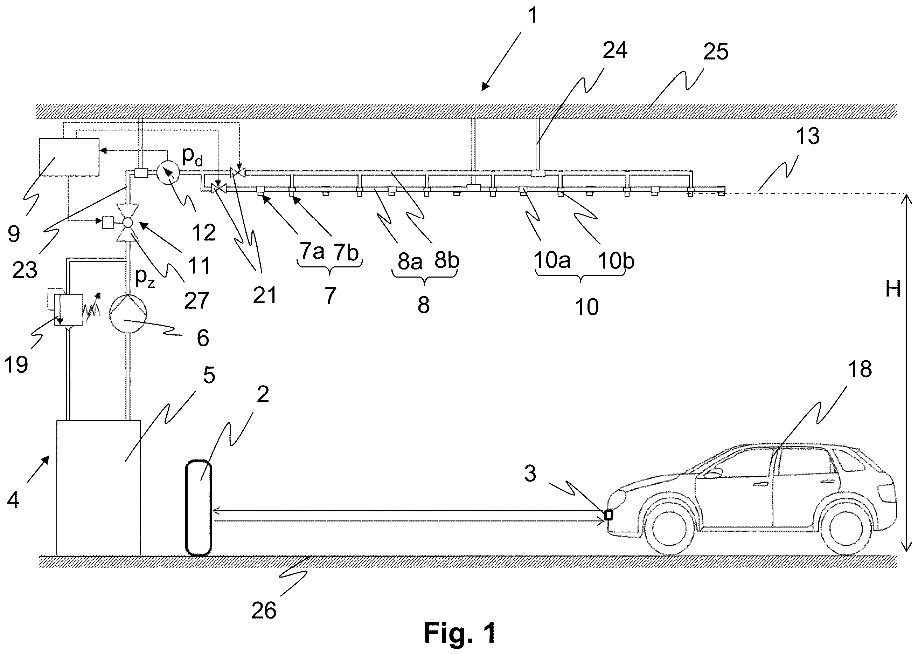

Figur 1 zeigt eine Regensimulationsanlage 1 zum Testen von Witterungseinflüssen auf die Objekterkennung durch Sensoren 3 in einer schematischen Übersichtsdarstellung. Die Regensimulationsanlage 1 ist vorliegend in einer fest installierten Halle aufgebaut, so dass äußere Störeinflüsse auf die Testung der Sensoren weitgehend ausgeschlossen werden können. Ebenfalls denkbar ist jedoch auch eine mobile Anwendung, bei welcher die Regensimulationsanlage 1 beispielsweise in einem Zelt aufgebaut ist.

Die Regensimulationsanlage 1 umfasst in an sich bekannter Weise eine Einrichtung zur Wasserzufuhr 4, vorliegend in Form eines Wassertanks 5, sowie eine hydraulisch mit der Einrichtung zur Wasserzufuhr 4 verbundenen Pumpe 6 zur Erzeugung eines Zuführdruckes p_{z}. Weiterhin umfasst die Regensimulationsanlage 1 eine erste Düsenanordnung 7a, welche mittels eines ersten Rohrleitungssystems 8a mit der Pumpe 6 hydraulisch verbunden ist, sowie eine zweite Düsenanordnung 7b, welche mittels wenigstens eines zweiten Rohrleitungssystems 8b mit der Pumpe 6 hydraulisch verbunden ist. Weiterhin ist eine Steuereinheit 9 zum Ansteuern der Düsenanordnungen 7 vorgesehen. Ein Druckbegrenzer 19 dient schließlich noch der Begrenzung des Pumpendrucks.

Die Regensimulationsanlage 1 dient vorliegend dem Testen von Witterungseinflüssen auf die Objekterkennung von Umfeldsensoren in Kraftfahrzeugen 18. Dies ist vorliegend exemplarisch dargestellt. Dabei ist auf dem Boden 26 der Regensimulationsanlage 1 bzw. der Halle ein Kraftfahrzeug 18 gezeigt, das beispielhaft mit einem Sensor 3 versehen ist. In der Realität ist ein Kraftfahrzeug 18 natürlich mit einer Vielzahl von unterschiedlichen Sensoren 3 versehen. Dabei kommen verschiedenartige Sensoren 3 u.a. in Form von Ultraschallsensoren, Kameras, Lidar- und Radarsensoren zum Einsatz. Ebenfalls ist ein zu erkennendes Objekt 2 dargestellt. Weiterhin ist mit Pfeilen ein vom Sensor 3 ausgesendetes Messsignal sowie ein vom Objekt 2 reflektiertes bzw. vom Sensor 3 wieder empfangenes Messsignal dargestellt. Das Messsignal wird unter Witterungseinflüssen wie Regen oder Nebel durch verschiedene physikalische Effekte wie Absorption und Transmission, Reflexion und Streuung abgeschwächt. Dadurch können die Sensoren 3 Objekte 2 nicht mehr zuverlässig erkennen. Aus Sicherheitsgründen sollten Sensoren 3, die sich in einem kritischen Zustand befinden, nicht als Auslösekriterien für automatisierte Prozesse herangezogen werden. Es ist deshalb erforderlich, mittels solcher Tests die zuverlässigen sowie die kritischen Funktionsbereiche der Sensoren 3 zu ermitteln und insbesondere für jeden einzelnen Sensor 3 den Arbeitspunkt zu ermitteln, bei dem der Sensor 3 vom zuverlässigen in den unzuverlässigen Zustand übergeht.

Die Störung der Messsignale durch die o.g. Effekte ist stark abhängig von der Intensität des Regens bzw. des Nebels sowie vom Tropfendurchmesser und der Anzahl der mit dem entsprechenden Durchmesser vorliegenden Tropfen. Die Intensität des Niederschlags wird dabei in mm/h und die Stärke des Nebels in der meteorologischen Sichtweite in m angegeben. Ebenso ist die Störung der Messsignale auch von den Eigenschaften der einzelnen Sensoren 3 selbst wie Wellenlänge und Sensitivität abhängig. Um verschiedenste Sensoren 3 möglichst realitätsnah testen zu können, sollte eine Regensimulationsanlage 1 es deshalb ermöglichen, sowohl die Intensität als auch die Wassertropfengröße und -verteilung des Niederschlags auf verschiedene Werte einzustellen. Für zuverlässige und reproduzierbare Testergebnisse sollte zudem die Regenintensität in jedem Testfall möglichst zeitlich konstant und über die Testfläche gleichmäßig verteilt sein.

Die vorliegend gezeigte Regensimulationsanlage 1 umfasst deshalb Düsen 10a, 10b verschiedener Bauarten, die vorliegend mittels Aufhängungen 24 an der Decke 25 der Halle befestigt sind. Dabei weist die erste Düsenanordnung 7a Düsen einer ersten Bauart 10a auf und die zweite Düsenanordnung 7b Düsen einer zweiten Bauart 10b auf. Die Düsen der ersten Bauart 10a und die Düsen der zweiten Bauart 10b weisen bei gleichen Zufuhrdruck p_{z} einen unterschiedlichen Volumenstrom auf. Es ist deshalb möglich, nahezu das gesamte Spektrum natürlich vorkommenden Regens mit einer Intensität zwischen 15 mm/h und 120 mm/h mit einer sehr hohen Homogenität abzubilden. Die Düsen 10a, 10b werden hierzu je nach Intensitätswahl angesteuert und kombiniert. So werden zur Simulation eines geringen Niederschlags beispielsweise lediglich die Düsen der ersten Bauart 10a und zur Simulation eines hohen Niederschlags beispielsweise lediglich die Düsen der zweiten Bauart 10b angesteuert bzw. mit Wasser beschickt. Ebenso können zur Simulation eines Niederschlags mit einer sehr hohen Intensität auch beide Düsen beider Bauarten 10a, 10b gemeinsam angesteuert werden. Zudem kann die Intensität ebenso wie die Tropfengröße auch durch eine Veränderung des Zuführdruckes p_{z} variiert werden. Beispielsweise ist der Zuführdruck p_{z} in einem Bereich 0,5 bar - 2,0 bar veränderbar.

Die Düsenanordnungen 7a, 7b sind bevorzugt in einer Höhe H oberhalb des Bodens 26 angeordnet, welche das Erreichen der Tropfenendgeschwindigkeit der meisten Tropfen ermöglicht. Es hat sich gezeigt, dass eine Fallhöhe von etwa 5 m optimal ist, da bei dieser Höhe 90 % der Tropfen die Endgeschwindigkeit erreichen.

Im vorliegenden Beispiel sind weiterhin die Düsen der ersten Bauart 10a der ersten Düsenanordnung 7a und die Düsen der zweiten Bauart 10b der zweiten Düsenanordnung 7b in einer gemeinsamen horizontalen Ebene 13 angeordnet. Auch dies trägt zu einer hohen Gleichmäßigkeit des erzeugten Regens bei.

Die vorliegend gezeigte Regensimulationsanlage 1 weist weiterhin noch eine Druckregeleinheit 11 auf, sodass der Zuführdruck p_{z} nicht nur eingestellt, sondern auch automatisch nachgesteuert werden kann. Dies trägt weiterhin zu einer hohen zeitlichen Konstanz des Niederschlags über den gesamten Simulationsprozess bei. Die Druckregeleinheit 11 beinhaltet hierzu ein Druckregelventil 27 sowie einen Drucksensor 12 zur Messung des an den Düsen 10 anliegenden Drucks p_{d}. Der Druckbegrenzer 19 dient dabei auch einer Justierbarkeit des konkreten Regelbereichs der Druckregeleinheit 11.

Mit strichpunktierten Linien sind dabei das Sensorsignal des Drucksensors 12 sowie die Steuersignale für die Absperrventile 21 und das Druckregelventil 27 symbolisiert. Durch Benutzereingabe an der Steuereinheit 9 können verschiedene Sollwerte wie beispielsweise die gewünschte Tropfenverteilung, die gewünschte Tropfengröße sowie die Intensität (bei Regen) bzw. die Sichtweite (bei Nebel) eingestellt werden. Durch die Steuerung 9 werden dann die Absperrventile 21 der Düsen 10a, 10b entsprechend angesteuert sowie der Zuführdruck p_{z} entsprechend den Sollwerten eingestellt und gemäß der vorliegenden Ausführung auch über den gesamten Simulationsprozess geregelt bzw. nachgestellt.

Mittels der hier dargestellten Regelung ist es zudem möglich, den Zuführdruck p_{z} stufenlos einzustellen und beispielsweise auch bestimmte Beregnungsprogramme zu fahren. Ebenso ist eine manuelle Einstellung möglich.

Die beiden Rohrleitungssysteme 8a und 8b werden vorliegend durch eine gemeinsame Zuleitung 23 versorgt. Es versteht sich, dass jedes Rohrleitungssystem 8a, 8b auch mittels einer eigenen Zuleitung 23 versorgt werden könnte. Vorliegend ist weiterhin auch nur ein Drucksensor 12 in der gemeinsamen Zuleitung 23 vorgesehen. Es könnte jedoch auch ein eigener Drucksensor 12 für jedes Rohrleitungssystem 8a, 8b vorgesehen sein.

Für eine hohe örtliche Homogenität des Regens bei jeder Intensitätsstufe ist zudem auch die Anordnung der Düsen 10a, 10b innerhalb der Regensimulationsanlage 1 von Bedeutung.

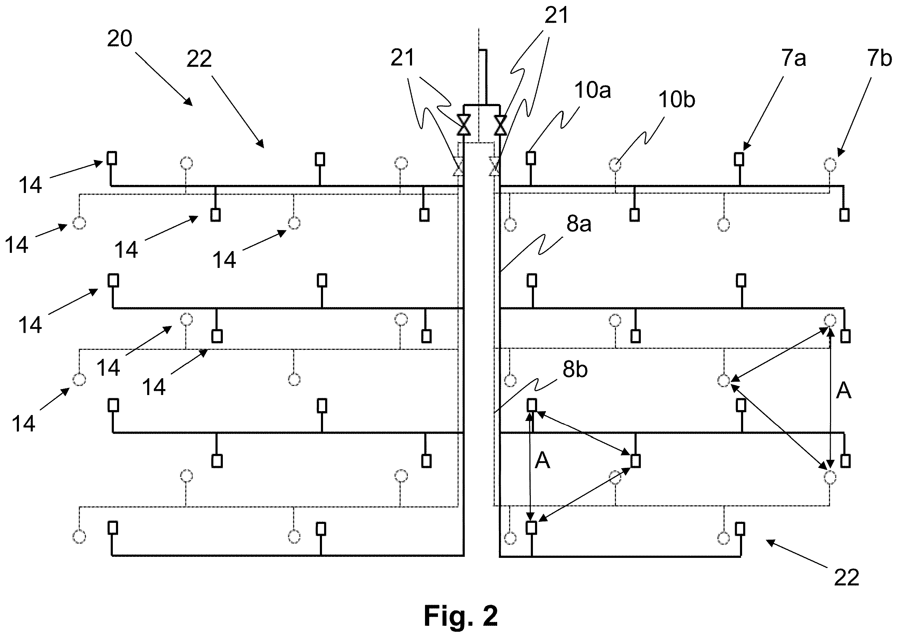

Figur 2 zeigt eine Draufsicht auf ein Segment 20 einer Regensimulationsanlage 1 mit zwei Düsenanordnungen 7a, 7b. Zur besseren Unterscheidbarkeit sind dabei die Düsen 10b der zweiten Düsenanordnung 7b sowie das zweite Rohrleitungssystem 8b mit gestrichelten Linien und geringfügig versetzt zu dem ersten Rohrleitungssystem 8a und der zweiten Düsenanordnung 7a dargestellt. Um eine möglichst gleichmäßige Regelung über die gesamte Regenfläche zu erzielen, sind die Düsen der ersten Bauart 10a der ersten Düsenanordnung 7a ebenso wie die Düsen der zweiten Bauart 10b der zweiten Düsenanordnung 7b jeweils in mehreren Reihen 14 mit einem seitlichen Versatz zueinander angeordnet. Hierdurch ergibt sich bei einem über 360° gleichmäßigen Sprühkegel der Düsen 10a, 10b eine optimale Überdeckung der Berechnungsfläche und somit auch eine sehr hohe örtliche Homogenität des erzeugten Regens.

Wie der Figur 2 weiterhin entnehmbar, ergibt sich in jeder der Düsenanordungen 7a, 7b durch die versetzte Anordnung der Düsen 10a, 10b eine dreieckförmige Anordnung der Düsen 10a, 10b zueinander. Beispielhaft ist rechts unten im Bild für jede der Düsenanordnungen 7a, 7b ein solches Dreieck durch die Abstände A zwischen den einzelnen Düsen 10a, 10b dargestellt. Idealerweise bilden jeweils drei Düsen 10a, 10b dabei ein gleichseitiges Dreieck. Da in der Realität jede Düse 10a, 10b auch innerhalb einer Bauart einen leicht unterschiedlich großen Sprühkegel ausbildet, kann es jedoch auch sinnvoll sein, die Abstände A jeder einzelnen Düse 10a, 10b zu den umgebenden Düsen 10a, 10b der gleichen Bauart jeweils individuell anzupassen. Die Abweichungen der Seitenlängen des "gleichseitigen" Dreiecks zueinander betragen dabei vorzugsweise jedoch weniger als 10%. Dies trägt zu einem geometrisch gut überlappenden und homogenen Regenbild bei und ist daher auch unabhängig von der hier konkret gezeigten Ausbildung des Segments 20 vorteilhaft.

Die Abstände der Düsen 10a, 10b zueinander können dabei für jede Bauart unterschiedlich sein, entsprechend der Kegelausbildung der Düsen 10a, 10b. Vorliegend weisen z.B. die Düsen der ersten Bauart 10a einen geringeren Abstand A zueinander auf als die Düsen der zweiten Bauart 10b. Auch dies trägt zu einer sehr hohen örtlichen Homogenität des Regens bei jeder gewünschten Intensität bei.

Vorliegend sind die erste Düsenanordnung 7a und die zweite Düsenanordnung 7b innerhalb des Segments 20 in zwei Halbsegmenten 22 angeordnet, die durch die mittige Zuführung des Wassers über die gemeinsame Zuleitung 23 getrennt sind. Grundsätzlich könnte die Zuführung des Wassers jedoch auch von der Seite her erfolgen. Weiterhin sind gemäß vorliegender Darstellung die Düsenanordnungen 7a, 7b jedes Halbsegments 22 einzeln mittels eines Absperrventils 21 abstellbar. Ebenso wäre jedoch auch eine gemeinsame Absperrung für beide Halbsegmente 22 möglich.

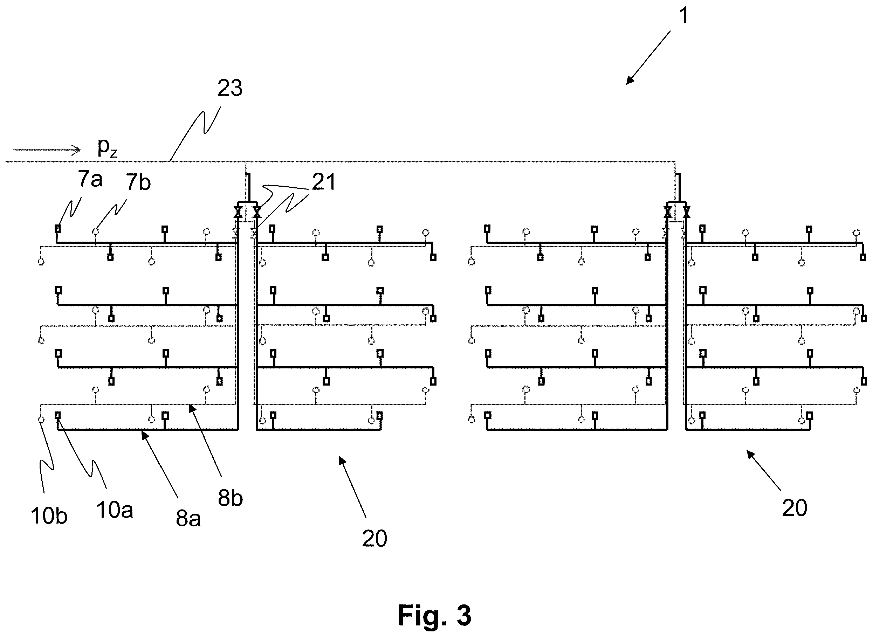

Für den Aufbau einer Regensimulationsanlage 1 kann je nach Anwendungsfall bereits ein solches Segment 20 ausreichend sein. Um längere Regen- bzw. Nebelstrecken aufzubauen, ist es jedoch ebenso möglich, mehrere solcher Segmente 20 hintereinander anzuordnen. Dies ist in Figur 3 dargestellt, welche eine Draufsicht einer Regensimulationsanlage 1 mit mehreren Segmenten 20 zeigt. Denkbar wäre es natürlich auch, mehrere solcher Segmente 20 nebeneinander anzuordnen, um breitere Regen- bzw. Nebelstrecken aufzubauen.

Die Länge eines Segments 20 mit jeweils zwei Halbsegmenten 22 kann beispielsweise etwa 8 m betragen. Werden mehrere solcher Segmente 20 hintereinander angeordnet, so können auch lange Regen- und Nebelstrecken mit Längen von beispielsweise 50 m installiert werden. Beträgt die Breite der Segmente ebenfalls etwa 4 m, so können sehr reale Testbedingungen für Fahrzeuge geschaffen werden. Es ist hierdurch möglich, sehr große Regenflächen von mehr als 60 m² bis zu 200 m² aufzubauen und dadurch realitätsnahe Testbedingungen zu schaffen.

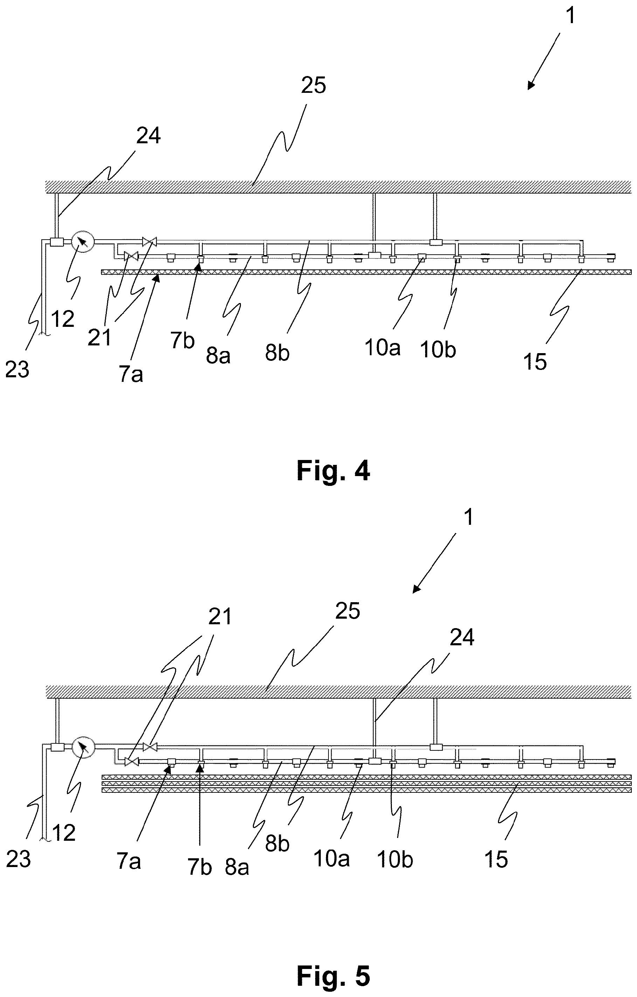

Figur 4 zeigt weiterhin eine schematische Detailansicht einer Regensimulationsanlage 1 mit einem unterhalb der Düsenanordnungen 7a, 7b angeordneten Netz 15. Mittels eines solchen Netzes 15 kann die Tropfengröße des erzeugten Regens beeinflusst und eine gewünschte Tropfengrößenverteilung eingestellt werden. Das Netz 15 ist in der Lage, sehr feine Tröpfchen auszufüllen und aus den kleineren Tropfen größere Tropfen zu erzeugen. Das Netz 15 kann beispielsweise direkt an den Rohrleitungssystemen 8 oder an den Aufhängungen 24 der Segmente 20 angebracht werden.

Um verschiedene Tropfengrößen und unterschiedliche Tropfengrößenverteilungen einzustellen, ist das Netz 15 vorzugsweise austauschbar und es können verschiedene Netze 15 mit unterschiedlichen Maschenweiten eingesetzt werden. Es hat sich gezeigt, dass insbesondere mit feineren Netzen mit einer Maschenweite von unter 15 mm, vorzugsweise mit einer Maschenweite von unter 10 mm, auch Tropfen mit einem Durchmesser von beispielsweise 4 mm und darüber erzeugt werden können. Demgegenüber können nur mit den Düsenanordnungen 7 nur Tropfen mit einem Durchmesser von weniger als 3 mm erzeugt werden. Um eine realem Regen entsprechende Tropfengrößenverteilung zu erreichen, die auch größere Tropfendurchmesser abdeckt, ist die Anordnung eines solchen Netzes 15 somit hilfreich.

Zur Einstellung der Tropfengrößen und Tropfengrößenverteilungen kann es auch hilfreich sein, ein mehrlagiges Netz 15 anzuordnen oder mehrere Netze 15 übereinander anzuordnen, wie es in Figur 5 gezeigt ist. Beispielsweise kann das Netz 15 dreilagig wie in Figur 5 oder vierlagig ausgebildet sein.

In Kombination mit der Erzeugung des Regens durch zwei unterschiedliche Bauarten von Düsen 10a, 10b sowie durch unterschiedliche Drücke pₐ an den Düsen können somit Tropfen der gewünschten Durchmessergröße erzeugt werden. Für die Testung verschiedener Sensoren ist dies sehr hilfreich, da die Dämpfung des Messsignals auch vom Tropfendurchmesser des Regens abhängig ist.

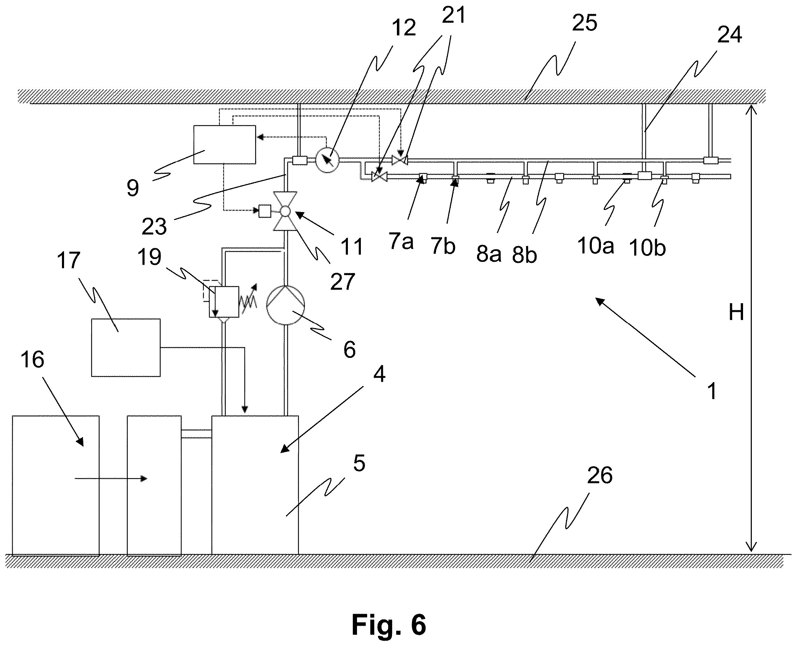

Figur 6 zeigt weiterhin noch eine schematische Darstellung einer Regensimulationsanlage 1 nach einer weiteren Ausführung mit Wasseraufbereitung. Die Regensimulationsanlage 1 weist eine Entkalkungsanlage 16 auf, mittels welcher der im Leitungswasser üblicherweise enthaltene Kalk entfernt werden kann. Die Entkalkungsanlage arbeitet nach dem üblichen Prinzip mit einem Ionentauscher und wird daher an dieser Stelle nicht näher erläutert. Durch die Entfernung des Kalks entspricht der Brechungsindex der Tropfen weitgehend dem natürlicher Regentropfen, sodass durch die Verwendung von Leitungswasser keine Verfälschungen der Messergebnisse zu erwarten sind.

Gemäß der vorliegenden Darstellung enthält die Regensimulationsanlage 1 weiterhin noch eine Desinfektionsstation 17 zur Entkeimung des der Regensimulationsanlage 1 zugeführten Wassers. Mittels der Desinfektionsstation 17 kann dem Wasser ein Desinfektionsmittel zugeführt werden, sodass das zugeführte Wasser keine nachteiligen Veränderungen durch Verkeimung erfährt und die Eigenschaften des Wassers erhalten bleiben.

Für die Durchführung von Tests kann beispielsweise auch ein Regenereignis erzeugt werden, bei dem die Intensität des Regens stufenlos erhöht wird. Hierzu wird zunächst nur die erste Düsenanordnung 7a aktiviert und der an den Düsen der ersten Bauart 10a anliegende Druck pₐ beispielsweise von 0,5 bar - 2 bar sukzessive erhöht. Die Düsenanordnung 7b bleibt dabei deaktiviert.

Zur weiteren Erhöhung der Intensität des Niederschlags wird dann die erste Düsenanordnung 7a bei Erreichen des Endwertes des Druckes, im Beispiel 2 bar, wieder deaktiviert und die zweite Düsenanordnung 7b aktiviert. Der an den Düsen der zweiten Bauart 10b anliegende Druck wird dabei wiederum sukzessive von 0,5 bar - beispielsweise 1 bar angesteuert.

Zur weiteren Erhöhung der Intensität werden danach beide Düsenanordnungen 7a, 7b gemeinsam betrieben. Ist wie in den vorliegenden Beispielen nur eine Pumpe 6 und eine gemeinsame Zuleitung 23 für beide Düsenanordnungen 7a, 7b vorgesehen, so liegt an beiden Düsenanordnungen 7a, 7b der gleiche Druck pₐ an. Die Düsenanordnungen 7a, 7b werden sodann ebenfalls sukzessive von beispielsweise 0,5 bar - beispielsweise etwa 2 bar angesteuert.

Ebenso ist es natürlich denkbar, ein Regenereignis zu erzeugen, bei dem die Intensität des Regens von einem Ausgangswert mit einer hohen Intensität auf einen Endwert mit einer niedrigen Intensität reduziert wird. Weiterhin ist es auch möglich, ein Regenereignis mit einer bestimmten konstanten Intensität vorzugeben, welche z.B. über mehrere Minuten gehalten wird.

Vom Benutzer wird vorzugsweise lediglich die gewünschte Intensität oder der gewünschte Intensitätsbereich vorgegeben. Ebenso kann, sofern mehrere einzeln ansteuerbare Segmente 20 vorhanden sind, der gewünschte Ort interhalb der Regensimulationsanlage 1 vorgegeben werden.

Die Steuereinheit 9 kann dann den für die gewünschte Intensität erforderlichen Zuführdruck p_{z} selbstständig einstellen. Die jeweils gewünschte Intensität kann vom Benutzer direkt in die Steuereinheit 9 eingegeben werden und je nach Wusch verändert werden. Es ist jedoch ebenfalls denkbar, bestimmte Beregnungsprogramme in der Steuereinheit 9 zu hinterlegen, in denen innerhalb eines Regenereignisses verschiedene Orte und Intensitäten als Sollwerte hinterlegt werden, die dann von der Steuereinheit automatisch durch Einstellung des entsprechenden Zuführdruckes p_{z} und Aktivieren der entsprechenden Segmente 20 eingestellt werden.

Es kann somit bei dem Verfahren zum Testen von Witterungseinflüssen auf die Objekterkennung von Sensoren das gesamte Spektrum der Intensitäten natürlichen Regens abgedeckt werden, wobei durch verschiedene Netze zudem auch noch die Tropfengröße optimiert werden kann.

Mittels der beschriebenen Regensimulationsanlage ist es möglich, für jede Regenintensität eine räumlich und zeitlich konstante Tropfengrößenverteilung mit sehr hoher Homogenität bereitzustellen und damit die Tests sehr realitätsnah durchzuführen.

### Bezeichenliste

- 1: Regensimulationsanlage
- 2: Objekt
- 3: Sensor
- 4: Einrichtung zur Wasserzufuhr
- 5: Wassertank
- 6: Pumpe
- 7a: erste Düsenanordnung
- 7b: zweite Düsenanordnung
- 8a: erstes Rohrleitungssystem
- 8b: zweites Rohrleitungssystem
- 9: Steuereinheit
- 10a: Düse einer ersten Bauart
- 10b: Düse einer zweiten Bauart
- 11: Druckregeleinheit
- 12: Drucksensor
- 13: gemeinsame Ebene
- 14: Reihe
- 15: Netz
- 16: Entkalkungsanlage
- 17: Desinfektionsstation
- 18: Kraftfahrzeug
- 19: Druckbegrenzer
- 20: Segment
- 21: Absperrventil
- 22: Halbsegment
- 23: Zuleitung
- 24: Aufhängung
- 25: Decke
- 26: Boden
- 27: Druckregelventil
- p_{z}: Zuführdruck
- p_{d}: an den Düsen anliegender Druck
- A: Abstand der Düsen
- H: Höhe

## Patentansprüche

1. Regensimulationsanlage (1) zum Testen von Witterungseinflüssen auf die Objekterkennung durch Sensoren (3), insbesondere durch Umfeldsensoren von Kraftfahrzeugen (18),
mit einer Einrichtung zur Wasserzufuhr (4), insbesondere einem Wassertank (5),
mit einer mit der Einrichtung zur Wasserzufuhr (4) hydraulisch verbundenen Pumpe (6) zur Erzeugung eines Zuführdruckes (p_{z}),
mit wenigstens einer ersten Düsenanordnung (7a), welche mittels wenigstens eines ersten Rohrleitungssystems (8a) mit der Pumpe (6) hydraulisch verbunden ist,
mit wenigstens einer zweiten Düsenanordnung (7b), welche mittels wenigstens eines zweiten Rohrleitungssystems (8b) mit der Pumpe (6) hydraulisch verbunden ist,
sowie mit einer Steuereinheit (9) zum Ansteuern der Düsenanordnungen (7a, 7b), wobei das erste Rohrleitungssystem (8a) wenigstens ein Absperrventil (21) beinhaltet und wobei das zweite Rohrleitungssystem (8b) wenigstens ein Absperrventil (21) beinhaltet, und wobei die wenigstens eine erste Düsenanordnung (7a) und die wenigstens eine zweite Düsenanordnung (7b) durch Ansteuerung der Absperrventile (21) unabhängig voneinander ansteuerbar und/oder mit Wasser beschickbar sind,
**dadurch gekennzeichnet,**
**dass** die erste Düsenanordnung (7a) eine erste Anzahl von Düsen einer ersten Bauart (10a) umfasst und die zweite Düsenanordnung (7b) eine zweite Anzahl von Düsen einer zweiten Bauart (10b) umfasst, wobei die Düsen der ersten Bauart (10a) und die Düsen der zweiten Bauart (10b) bei gleichem Zuführdruck (p_{z}) jeweils einen unterschiedlichen Volumenstrom aufweisen.

2. Regensimulationsanlage (1) nach dem vorhergehenden Anspruch, **dadurch gekennzeichnet, dass** eine Regenintensität der Regensimulationsanlage (1) einstellbar ist, vorzugsweise zwischen einer Intensität von 10 mm/h und 200 mm/h und besonders bevorzugt zwischen einer Intensität von 15 mm/h und 120 mm/h einstellbar ist, wobei vorzugsweise die Intensität stufenlos einstellbar ist.

3. Regensimulationsanlage (1) nach dem vorhergehenden Anspruch, **dadurch gekennzeichnet, dass** die Regenintensität durch Veränderung des Zuführdruckes (p_{z}) veränderbar ist und/oder dass die Regenintensität durch wahlweises Ansteuern nur der ersten Düsenanordnung (7a) oder nur der zweiten Düsenanordnung (7b) oder gleichzeitig beider Düsenanordnungen (7a, 7b) veränderbar ist.

4. Regensimulationsanlage (1) nach einem der vorhergehenden Ansprüche, **dadurch gekennzeichnet, dass** die erste Düsenanordnung (7a) axial angeströmte Düsen (10a) umfasst und die zweite Düsenanordnung (7b) tangential angeströmte Düsen (10b) umfasst, wobei vorzugsweise die Düsen der ersten Bauart (10a) der ersten Düsenanordnung (7a) und/oder die Düsen der zweiten Bauart (10b) der zweiten Düsenanordnung (7b) als Vollkegeldüsen ausgebildet sind.

5. Regensimulationsanlage (1) nach einem der vorhergehenden Ansprüche, **dadurch gekennzeichnet, dass** zumindest die Düsen (10a, 10b) jeweils einer Düsenanordnung (7a, 7b), vorzugsweise die Düsen (10a, 10b) sämtlicher Düsenanordnungen (7a, 7b), in einer gemeinsamen, insbesondere horizontalen, Ebene (13) angeordnet sind.

6. Regensimulationsanlage (1) nach einem der vorhergehenden Ansprüche, **dadurch gekennzeichnet, dass** die Düsen der ersten Bauart (10a) der ersten Düsenanordnung (7a) und/oder die Düsen der zweiten Bauart (10b) der zweiten Düsenanordnung (7b) in mehreren Reihen (14) angeordnet sind, wobei die Düsen (10a, 10b) einer Reihe (14) jeweils versetzt zu den Düsen (10a, 10b) der benachbarten Reihen (14) angeordnet sind, wobei vorzugsweise jeweils drei Düsen einer Bauart (10a. 10b) in Form eines Dreiecks angeordnet sind.

7. Regensimulationsanlage (1) nach einem der vorhergehenden Ansprüche, **dadurch gekennzeichnet, dass** zur Einstellung einer gewünschten Tropfengrößenverteilung unterhalb der Düsenanordnungen (7a, 7b) wenigstens ein Netz (15) angeordnet ist, wobei vorzugsweise das Netz (15) mehrlagig ausgebildet ist und/oder mehrere Netze (15) übereinander angeordnet sind.

8. Regensimulationsanlage (1) nach einem der vorhergehenden Ansprüche, **dadurch gekennzeichnet, dass** die erste Düsenanordnung (7a) und/oder die zweite Düsenanordnung (7b) in einer Höhe (H) von wenigstens 4 m, vorzugsweise in einer Höhe (H) von wenigstens 5 m, über einem Boden (26) der Regensimulationsanlage (1) angeordnet sind.

9. Regensimulationsanlage (1) nach einem der vorhergehenden Ansprüche, **dadurch gekennzeichnet, dass** die Regensimulationsanlage (1) eine Entkalkungsanlage (16) zur Entkalkung von der Regensimulationsanlage (1) zugeführtem Wasser aufweist und/oder dass die Regensimulationsanlage (1) eine Desinfektionsstation (17) zur Entkeimung von der Regensimulationsanlage (1) zugeführten Wasser aufweist.

10. Verwendung einer Regensimulationsanlage (1) nach einem oder mehreren der vorherigen Ansprüche zum Testen von Witterungseinflüssen auf die Objekterkennung von Umfeldsensoren von Kraftfahrzeugen (18).

11. Verfahren zum Testen von Witterungseinflüssen auf die Objekterkennung von Sensoren (3), insbesondere von Umfeldsensoren von Kraftfahrzeugen (18), mit einer Regensimulationsanlage (1) nach einem der Ansprüche 1 - 9.

12. Verfahren nach dem vorhergehenden Anspruch, **dadurch gekennzeichnet, dass** zur Erzeugung von Regen mit einer niedrigen Intensität nur die Düsen der ersten Bauart (10a) der ersten Düsenanordnung (7a) angesteuert werden.

13. Verfahren nach einem der beiden vorhergehenden Ansprüche, **dadurch gekennzeichnet, dass** zur Erzeugung von Regen mit einer höheren Intensität nur die Düsen der zweiten Bauart (10b) der zweiten Düsenanordnung (7b) angesteuert werden, oder dass zur Erzeugung von Regen mit einer höheren Intensität die Düsen (10a, 10b) der ersten und der zweiten Düsenanordnung (7a, 7b) gemeinsam angesteuert werden.

14. Verfahren nach einem der vorhergehenden Verfahrensansprüche, **dadurch gekennzeichnet, dass** zur Erzeugung von Regen mit einer mittleren Intensität nur die Düsen der zweiten Bauart (10b) der zweiten Düsenanordnung (7b) angesteuert werden, oder dass zur Erzeugung von Regen mit einer hohen Intensität die Düsen (10a, 10b) der ersten und der zweiten Düsenanordnung (7a, 7b) gemeinsam angesteuert werden.

## Claims

1. Rain simulation system (1) for testing weather influences on object detection by sensors (3), in particular by surroundings sensors of motor vehicles (18),
having a device for supplying water (4), in particular a water tank (5), having a pump (6), which is hydraulically connected to the device for supplying water (4), for the generation of a supply pressure (p_{z}), having at least one first nozzle arrangement (7a), which is hydraulically connected to the pump (6) by means of at least one first pipeline system (8a),
having at least one second nozzle arrangement (7b), which is hydraulically connected to the pump (6) by means of at least one second pipeline system (8b),
and having a control unit (9) for controlling the nozzle arrangements (7a, 7b), wherein the first pipeline system (8a) contains at least one shut-off valve (21) and wherein the second pipeline system (8b) contains at least one shut-off valve (21), and wherein the at least one first nozzle arrangement (7a) and the at least one second nozzle arrangement (7b) can be controlled independently of one another and/or charged with water by controlling the shut-off valves (21),
**characterized**
**in that** the first nozzle arrangement (7a) comprises a first number of nozzles of a first type (10a) and the second nozzle arrangement (7b) comprises a second number of nozzles of a second type (10b), wherein the nozzles of the first type (10a) and the nozzles of the second type (10b) each have a different volume flow at the same supply pressure (p_{z}).

2. Rain simulation system (1) according to the preceding claim, **characterized in that** a rain intensity of the rain simulation system (1) can be set, preferably can be set between an intensity of 10 mm/h and 200 mm/h and particularly preferably between an intensity of 15 mm/h and 120 mm/h, wherein the intensity can preferably be set continuously.

3. Rain simulation system (1) according to the preceding claim, **characterized in that** that the rain intensity can be changed by changing the supply pressure (p_{z}) and/or **in that** the rain intensity can be changed by selectively controlling only the first nozzle arrangement (7a) or only the second nozzle arrangement (7b) or both nozzle arrangements (7a, 7b) simultaneously.

4. Rain simulation system (1) according to one of the preceding claims, **characterized in that** the first nozzle arrangement (7a) comprises axially impinged nozzles (10a) and the second nozzle arrangement (7b) comprises tangentially impinged nozzles (10b), wherein the nozzles of the first type (10a) of the first nozzle arrangement (7a) and/or the nozzles of the second type (10b) of the second nozzle arrangement (7b) are preferably designed as full-cone nozzles.

5. Rain simulation system (1) according to one of the preceding claims, **characterized in that** at least the nozzles (10a, 10b) of a respective nozzle arrangement (7a, 7b), preferably the nozzles (10a, 10b) of all nozzle arrangements (7a, 7b), are arranged in a common, in particular horizontal, plane (13).

6. Rain simulation system (1) according to one of the preceding claims, **characterized in that** the nozzles of the first type (10a) of the first nozzle arrangement (7a) and/or the nozzles of the second type (10b) of the second nozzle arrangement (7b) are arranged in multiple rows (14), wherein the nozzles (10a, 10b) of a row (14) are each arranged offset with respect to the nozzles (10a, 10b) of the adjacent rows (14), wherein three nozzles of a type (10a, 10b) are preferably each arranged in the form of a triangle.

7. Rain simulation system (1) according to one of the preceding claims, **characterized in that**, in order to set a desired droplet size distribution, at least one net (15) is arranged below the nozzle arrangements (7a, 7b), wherein the net (15) is preferably of multilayer design and/or multiple nets (15) are arranged one above the other.

8. Rain simulation system (1) according to one of the preceding claims, **characterized in that** the first nozzle arrangement (7a) and/or the second nozzle arrangement (7b) are arranged at a height (H) of at least 4 m, preferably at a height (H) of at least 5 m, above a ground (26) of the rain simulation system (1).

9. Rain simulation system (1) according to one of the preceding claims, **characterized in that** the rain simulation system (1) has a decalcification system (16) for decalcification of water supplied to the rain simulation system (1) and/or **in that** the rain simulation system (1) has a disinfection station (17) for disinfection of water supplied to the rain simulation system (1).

10. Use of a rain simulation system (1) according to one or more of the preceding claims for testing weather influences on the object detection of surroundings sensors of motor vehicles (18).

11. Method for testing weather influences on the object detection of sensors (3), in particular of surroundings sensors of motor vehicles (18), with a rain simulation system (1) according to one of claims 1-9.

12. Method according to the preceding claim, **characterized in that**, in order to generate rain with a low intensity, only the nozzles of the first type (10a) of the first nozzle arrangement (7a) are controlled.

13. Method according to one of the two preceding claims, **characterized in that**, in order to generate rain with a higher intensity, only the nozzles of the second type (10b) of the second nozzle arrangement (7b) are controlled, or **in that**, in order to generate rain with a higher intensity, the nozzles (10a, 10b) of the first and the second nozzle arrangement (7a, 7b) are controlled jointly.

14. Method according to one of the preceding method claims, **characterized in that**, in order to generate rain with a medium intensity, only the nozzles of the second type (10b) of the second nozzle arrangement (7b) are controlled, or **in that**, in order to generate rain with a high intensity, the nozzles (10a, 10b) of the first and the second nozzle arrangement (7a, 7b) are controlled jointly.

## Revendications

1. Installation de simulation de pluie (1) pour tester des influences météorologiques sur la détection d'objets par des capteurs (3), en particulier par des capteurs d'environnement de véhicules automobiles (18),
comprenant un dispositif d'alimentation en eau (4), en particulier un réservoir d'eau (5),
comprenant une pompe (6) reliée hydrauliquement au dispositif d'alimentation en eau (4) pour la génération d'une pression d'alimentation (p_{z}),
comprenant au moins un premier agencement de buses (7a) qui est relié hydrauliquement à la pompe (6) au moyen d'au moins un premier système de tuyauterie (8a),
comprenant au moins un deuxième agencement de buses (7b) qui est relié hydrauliquement à la pompe (6) au moyen d'au moins un deuxième système de tuyauterie (8b),
et comprenant une unité de contrôle (9) pour contrôler les agencements de buses (7a, 7b), le premier système de tuyauterie (8a) contenant au moins une soupape d'arrêt (21) et le deuxième système de tuyauterie (8b) contenant au moins une soupape d'arrêt (21), et l'au moins un premier agencement de buses (7a) et l'au moins un deuxième agencement de buses (7b) pouvant être contrôlés indépendamment l'un de l'autre et/ou alimentés en eau par le contrôle des soupapes d'arrêt (21),
**caractérisée en ce que**
le premier agencement de buses (7a) comprend un premier nombre de buses d'un premier type de construction (10a) et le deuxième agencement de buses (7b) comprend un deuxième nombre de buses d'un deuxième type de construction (10b), les buses du premier type de construction (10a) et les buses du deuxième type de construction (10b) présentant chacune un flux volumique différent à la même pression d'alimentation (p_{z}).

2. Installation de simulation de pluie (1) selon la revendication précédente, **caractérisée en ce qu'**une intensité de pluie de l'installation de simulation de pluie (1) est réglable, de préférence réglable entre une intensité de 10 mm/h et 200 mm/h et de manière particulièrement préférée entre une intensité de 15 mm/h et 120 mm/h, l'intensité étant de préférence réglable en continu.

3. Installation de simulation de pluie (1) selon la revendication précédente, **caractérisée en ce que** l'intensité de pluie peut être modifiée par la modification de la pression d'alimentation (p_{z}) et/ou **en ce que** l'intensité de pluie peut être modifiée par contrôler au choix uniquement le premier agencement de buses (7a) ou uniquement le deuxième agencement de buses (7b) ou simultanément les deux agencements de buses (7a, 7b).

4. Installation de simulation de pluie (1) selon l'une des revendications précédentes, **caractérisée en ce que** le premier agencement de buses (7a) comprend des buses (10a) alimentées axialement et le deuxième agencement de buses (7b) comprend des buses (10b) alimentées tangentiellement, les buses du premier type de construction (10a) du premier agencement de buses (7a) et/ou les buses du deuxième type de construction (10b) du deuxième agencement de buses (7b) étant de préférence conçues comme des buses à cône plein.

5. Installation de simulation de pluie (1) selon l'une des revendications précédentes, **caractérisée en ce qu'**au moins les buses (10a, 10b) d'un agencement de buses (7a, 7b) respectif, de préférence les buses (10a, 10b) de tous les agencements de buses (7a, 7b), sont disposées dans un plan (13) commun, en particulier horizontal.

6. Installation de simulation de pluie (1) selon l'une des revendications précédentes, **caractérisée en ce que** les buses du premier type de construction (10a) du premier agencement de buses (7a) et/ou les buses du deuxième type de construction (10b) du deuxième agencement de buses (7b) sont disposées en plusieurs rangées (14), les buses (10a, 10b) d'une rangée (14) étant disposées de manière décalée par rapport aux buses (10a, 10b) des rangées (14) adjacentes, trois buses d'un type de construction (10a, 10b) étant de préférence disposées en forme de triangle.

7. Installation de simulation de pluie (1) selon l'une des revendications précédentes, **caractérisée en ce qu'**au moins un filet (15) est disposé en dessous des agencements de buses (7a, 7b) pour le réglage d'une distribution de taille de goutte souhaitée, le filet (15) étant de préférence conçu en plusieurs couches et/ou plusieurs filets (15) étant disposés les uns au-dessus des autres.

8. Installation de simulation de pluie (1) selon l'une des revendications précédentes, **caractérisée en ce que** le premier agencement de buses (7a) et/ou le deuxième agencement de buses (7b) sont disposés à une hauteur (H) d'au moins 4 m, de préférence à une hauteur (H) d'au moins 5 m, au-dessus d'un sol (26) de l'installation de simulation de pluie (1).

9. Installation de simulation de pluie (1) selon l'une des revendications précédentes, **caractérisée en ce que** l'installation de simulation de pluie (1) présente une installation de détartrage (16) pour le détartrage de l'eau amenée à l'installation de simulation de pluie (1) et/ou **en ce que** l'installation de simulation de pluie (1) présente une station de désinfection (17) pour la désinfection de l'eau amenée à l'installation de simulation de pluie (1).

10. Utilisation d'une installation de simulation de pluie (1) selon l'une ou plusieurs des revendications précédentes pour tester des influences météorologiques sur la détection d'objets par des capteurs d'environnement de véhicules automobiles (18).

11. Procédé pour tester des influences météorologiques sur la détection d'objets par des capteurs (3), en particulier par des capteurs d'environnement de véhicules automobiles (18), avec une installation de simulation de pluie (1) selon l'une des revendications 1 à 9.

12. Procédé selon la revendication précédente, **caractérisé en ce que** pour la génération de pluie avec une faible intensité, seules les buses du premier type de construction (10a) du premier agencement de buses (7a) sont contrôlées.

13. Procédé selon l'une des deux revendications précédentes, **caractérisé en ce que** pour la génération de pluie avec une intensité plus élevée, seules les buses du deuxième type de construction (10b) du deuxième agencement de buses (7b) sont contrôlées, ou **en ce que** pour la génération de pluie avec une intensité plus élevée, les buses (10a, 10b) du premier et du deuxième agencement de buses (7a, 7b) sont contrôlées conjointement.

14. Procédé selon l'une des revendications de procédé précédentes, **caractérisé en ce que** pour la génération de pluie avec une intensité moyenne, seules les buses du deuxième type de construction (10b) du deuxième agencement de buses (7b) sont contrôlées, ou **en ce que** pour la génération de pluie avec une intensité élevée, les buses (10a, 10b) du premier et du deuxième agencement de buses (7a, 7b) sont contrôlées conjointement.
